# EUROPEAN PATENT APPLICATION

(11) **EP 4 481 904 A1**
(43) Date of publication of application: **25.12.2024**
(21) Application number: 23756473.7
(22) Date of filing: 17.02.2023
(51) Int. Cl.: H01M 50/109, H01M 50/119, H01M 50/133

(54) **FLAT BATTERY**

(30) Priority: 18.02.2022 JP 2022023779
(71) Applicant: Maxell, Ltd., Kyoto 618-8525 (JP)
(72) Inventor: ISHIHARA, Toshihiko, Otokuni-gun, Kyoto 618-8525 (JP)
(74) Representative: Mewburn Ellis LLP
(86) International application number: PCT/JP2023/005756
(87) International publication number: WO 2023/157949

(57) **Abstract**

A flat battery is provided that enables an increase in its internal volume to increase battery capacity while maintaining good sealability. A flat battery 1 includes an exterior can 2, a seal can 3, and a gasket 5. The exterior can 2 includes a bottom 21 and a cylindrical side wall 22. The seal can 3 includes a top-face portion 31 and a peripheral wall 32. The peripheral wall 32 includes: a base-end portion 32a adjacent to the top-face portion 31; a cylindrical portion 32b having an outer diameter larger than the outer diameter of the base-end portion 32b and having an extreme edge facing the bottom 21 of the exterior can 2; and a stepped portion 32c located between the base-end portion 32a and the cylindrical portion 32b. The cylindrical portion is inclined radially outwardly going from its end adjacent to the stepped portion toward the extreme edge of the cylindrical portion and having an angle of inclination of 0.5° to 4° relative to the axial direction. The base-end portion is inclined radially inwardly going from its end adjacent to the top-face portion toward its end adjacent to the stepped portion and having an angle of inclination of 0.5° to 5° relative to the axial direction.

## Description

### TECHNICAL FIELD

The present disclosure relates to a flat battery.

### BACKGROUND ART

Conventionally, flat batteries such as coin-shaped or button-shaped nonaqueous electrolyte batteries are generally constructed by forming an exterior can and a seal can each from a stainless steel sheet and positioning a power generation element including a positive electrode and a negative electrode between the exterior can and seal can such that the element is contained therein. The exterior can includes a bottom and a cylindrical side wall, and the seal can includes a top-face portion and a peripheral wall and faces the exterior can. Conventionally, flat batteries having a seal can with a peripheral-wall thickness of approximately 0.25 mm are widely used.

JP 2018-18797 A (Patent Document 1) discloses a coin-shaped lithium primary battery. The coin-shaped lithium primary battery includes a case having a bottom plate and a side portion rising from the peripheral edge of the bottom plate, and a seal plate having a top-plate portion and a peripheral portion extending from the top-plate portion toward the inside of the side portion. An extreme edge portion of the peripheral portion of the seal plate is folded back to extend toward the level of the top-plate portion along the outer circumferential surface of the peripheral portion.

WO 2012/132373 A1 (Patent Document 2) discloses a coin battery. The coin battery includes a cylindrical battery can having a bottom-face portion and a first side wall rising from the peripheral edge of the bottom-face portion, and a seal plate having a top-plate portion and a second side wall extending from the peripheral edge of the top-plate portion toward the inside of the first side wall. The second side wall is provided with a bulging portion that bulges outwardly. The second side wall of the seal plate has a folded construction with an edge portion that is folded back.

JP H10-255733 A (Patent Document 3) discloses a compact battery. The compact battery includes a negative-electrode container and a positive-electrode container. The opening edge portion of the negative-electrode container is not folded back, but is subjected to pressure forming to have increased wall thickness.

JP H8-162075 A (Patent Document 4) discloses a coin-shaped lithium battery. The coin-shaped lithium battery includes: a seal plate with a peripheral portion that is not folded in a U-shape; and a bottomed cylindrical positive-electrode case. The opening portion of the seal plate is inclined radial outwardly, relative to the height direction of the positive-electrode case.

### PRIOR ART DOCUMENTS

### PATENT DOCUMENTS

Patent Document 1: JP 2018-18797 A
Patent Document 2: WO 2012/132373 A1
Patent Document 3: JP H10-255733 A
Patent Document 4: JP H8-162075 A

### SUMMARY OF THE INVENTION

In the coin-shaped lithium primary battery of Patent Document 1, an extreme edge portion of the peripheral portion of the seal plate is folded back to improve sealability with respect to the internal space of the battery. As a result, the peripheral portion of the seal plate has increased thickness, which limits the internal volume of the battery, preventing an increase in battery capacity.

In the coin battery of Patent Document 2, the second side wall of the seal plate needs to be provided with a flange of a relatively large width to provide sufficient liquid leakage resistance. As such, even though the seal plate is provided with a bulging portion, this does not necessarily lead to an increase in the entire internal volume of the battery, preventing an increase in battery capacity.

The compact battery of Patent Document 3 includes a negative-electrode container with an opening edge portion with increased wall thickness. Thus, while sealability is improved with respect to the internal space of the battery, the internal volume of the battery is limited, preventing an increase in battery capacity.

While the coin battery of Patent Document 4 provides improved liquid leakage resistance, it presents no proposal for increasing battery capacity.

In view of this, a problem to be solved by the present disclosure is to provide a flat battery that enables an increase in its internal volume to increase battery capacity while maintaining good sealability.

To solve the above-identified problem, the present disclosure provides the following arrangement: A flat battery according to the present disclosure includes: an exterior can including a bottom and a cylindrical side wall; a seal can including a top-face portion and a peripheral wall and facing the exterior can; and a gasket positioned between the cylindrical side wall and the peripheral wall. The peripheral wall includes: a base-end portion adjacent to the top-face portion; a cylindrical portion having an outer diameter larger than an outer diameter of the base-end portion and having an extreme edge facing the bottom of the exterior can; and a stepped portion located between the base-end portion and the cylindrical portion. The cylindrical portion is inclined radially outwardly going from an end adjacent to the stepped portion toward the extreme edge of the cylindrical portion and has an angle of inclination of 0.5° to 4° relative to an axial direction. The base-end portion is inclined radially inwardly going from an end adjacent to the top-face portion toward an end adjacent to the stepped portion and has an angle of inclination of 0.5° to 5° relative to the axial direction.

The flat battery according to the present disclosure enables an increase in its internal volume to increase battery capacity while providing good sealability.

### BRIEF DESCRIPTION OF DRAWINGS

[FIG. 1] FIG. 1 is a cross-sectional view of a flat battery according to the present embodiment, illustrating its construction.
[FIG. 2] FIG. 2 is an enlarged cross-sectional view of the flat battery shown in FIG. 1, illustrating its construction.
[FIG. 3] FIG. 3 is an enlarged cross-sectional view of a flat battery of an inventive example, illustrating its construction.
[FIG. 4] FIG. 4 is an enlarged cross-sectional view of a flat battery of a comparative example, illustrating its construction.
[FIG. 5] FIG. 5 is an enlarged cross-sectional view of the flat battery of the inventive example, illustrating its construction.
[FIG. 6] FIG. 6 is an enlarged cross-sectional view of a flat battery of a comparative example, illustrating its construction.
[FIG. 7] FIG. 7 is a graph showing surface pressure on the gasket over the relevant region in contact with the seal can.
[FIG. 8] FIG. 8 is a graph showing surface pressure on the gasket over the relevant region in contact with the seal can.

### EMBODIMENTS FOR CARRYING OUT THE INVENTION

A flat battery according to an embodiment includes: an exterior can including a bottom and a cylindrical side wall; a seal can including a top-face portion and a peripheral wall and facing the exterior can; and a gasket positioned between the cylindrical side wall and the peripheral wall. The peripheral wall includes: a base-end portion adjacent to the top-face portion; a cylindrical portion having an outer diameter larger than an outer diameter of the base-end portion and having an extreme edge facing the bottom of the exterior can; and a stepped portion located between the base-end portion and the cylindrical portion. According to a first embodiment directed to a flat battery, the cylindrical portion is inclined radially outwardly going from an end adjacent to the stepped portion toward the extreme edge of the cylindrical portion and has an angle of inclination of 0.5° to 4° relative to an axial direction. The base-end portion is inclined radially inwardly going from an end adjacent to the top-face portion toward an end adjacent to the stepped portion and has an angle of inclination of 0.5° to 5° relative to the axial direction. This will enable an increase in the battery's internal volume to increase battery capacity while maintaining good sealability. Further, it is preferable that the peripheral wall of the seal can has a thickness of 0.185 to 0.215 mm. This will facilitate forming an inclined construction for the cylindrical portion and base-end portion. It is preferable that the cylindrical side wall of the exterior can has a thickness of 92 to 108 % of the thickness of the peripheral wall. This will facilitate providing good sealability and increasing the internal volume.

According to a second embodiment directed to a flat battery, the peripheral wall has a thickness of 0.185 to 0.215 mm. The cylindrical side wall has a thickness of 92 to 108 % of the thickness of the peripheral wall. This will enable an increase in the internal volume to increase battery capacity while providing good sealability.

The cylindrical portion may be inclined radially outwardly going from an end adjacent to the stepped portion toward the extreme edge of the cylindrical portion.

It is preferable that the cylindrical portion has an angle of inclination of 0.5° to 4° relative to an axial direction.

The base-end portion may be inclined radially inwardly going from an end adjacent to the top-face portion toward an end adjacent to the stepped portion.

It is preferable that the base-end portion has an angle of inclination of 0.5° to 5° relative to an axial direction.

It is preferable that the seal can is formed from a cold-rolled steel sheet. A cold-rolled steel sheet that has a relatively low strength within the above-specified thickness range for the peripheral wall may be particularly suitably used since it allows the above-described inclined construction to be easily formed.

It is preferable that the exterior can is formed from a stainless steel sheet. This will reduce costs.

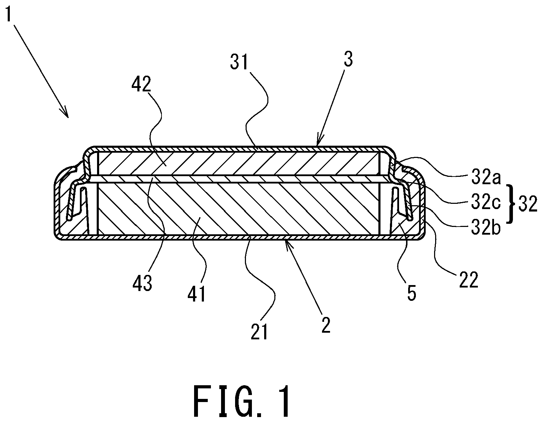

Now, a flat battery 1 according to the present embodiment of the present disclosure will be specifically described with reference to FIG. 1. The flat battery according to the present embodiment is a nonaqueous electrolyte battery. First, as shown in FIG. 1, the flat battery 1 includes an exterior can 2, a seal can 3, a positive electrode 41, a negative electrode 42, a separator 43, and a gasket 5. The internal space, between the exterior can 2 and seal can 3, is filled with the positive electrode 41, negative electrode 42, separator 43 and a nonaqueous electrolyte, not shown, which together constitute a power generation element. The power generation element may be one used in a common nonaqueous electrolyte battery. Accordingly, no detailed description of the power generation element will be given. It should be understood that the flat battery 1 is not limited to a nonaqueous electrolyte battery, and may be a flat all-solid-state battery using a solid electrolyte.

The exterior can 2 includes a circular bottom 21 and a cylindrical side wall 22 having the shape of a circular cylinder and extending from the periphery of the bottom 21, the bottom and side wall being continuous. As seen in a longitudinal cross-sectional view, the cylindrical side wall 22 extends generally perpendicular to the bottom 21. The exterior can 2 may be formed from, for example, a stainless steel such as an austenitic stainless steel such as SUS301, SUS304 or SUS316; an austenitic-ferritic stainless steel such as SUS329J1, SUS329J3L or SUS329J4L; or a ferritic stainless steel such as SUS430 or SUS444. The surface of the exterior can 2 may be provided with a corrosion-resistant plating such as Ni plating, or no corrosion-resistant plating may be provided in order to reduce costs. A shape of the exterior can 2 is not limited to a cylindrical shape having a circular bottom 21. For example, the exterior can 2 may be shaped such that the bottom 21 has the shape of a polygon such as a quadrangle or an ellipse and the cylindrical side wall 22 has a shape conforming with the shape of the bottom 21, such as a polygonal tube such as a quadrangular tube or an elliptical cylinder, and may be varied depending on the size and/or shape of the flat battery 1. Accordingly, a shape of the cylindrical side wall 22 includes not only a circular cylinder, but also a polygonal tube such as a quadrangular tube or an elliptical cylinder, for example. The bottom 21 of the exterior can 2 may be flat in shape, or may not be flat in shape. For example, the bottom 21 of the exterior can 2 may be shaped such that a portion on which the power generation element is positioned protrudes downwardly to accommodate a portion of the positive electrode 41 of the power generation element.

The seal can 3 includes a circular top-face portion 31 and a peripheral wall 32 having the shape of a circular cylinder and extending from the periphery of the top-face portion 31, the top-face portion and peripheral wall being continuous. The opening of the seal can 3 faces the opening of the exterior can 2. The seal can 3 may be formed from, for example, a stainless steel sheet such as those listed above or a cold-rolled steel sheet (e.g., SPCD, SPCE or SPCF). The surface of the seal can 3 is provided with a corrosion-resistant plating. The corrosion-resistant plating may be Ni plating, for example. A shape of the seal can 3 is not limited to a cylindrical shape having a circular top-face portion 31. For example, the seal can 3 may be shaped such that the top-face portion 31 has the shape of a polygon such as a quadrangle or an ellipse and the peripheral wall 32 has a shape conforming with the shape of the top-face portion 31, such as a polygonal tube such as a quadrangular tube or an elliptical cylinder, and may be varied depending on the size and/or shape of the flat battery 1. Accordingly, a shape of the peripheral wall 32 includes not only a circular cylinder, but also a polygonal tube such as a quadrangular tube or an elliptical cylinder, for example. The top-face portion 31 of the seal can 3 may be flat in shape, or may not be flat in shape. For example, the top-face portion 31 of the seal can 3 may be have a shape including a curved surface, e.g., may slightly inclined from the periphery toward the center.

The peripheral wall 32 of the seal can 3 includes a base-end portion 32a adjacent to the top-face portion 31, a cylindrical portion 32b having an outer diameter larger than the outer diameter of the base-end portion 32a, and a stepped portion 32c between the base-end portion 32a and cylindrical portion 32b. Thus, the peripheral wall 32 is stepped in shape, where the cylindrical portion 32b expands outward of the base-end portion 32a. The extreme edge of the cylindrical portion 32b faces the bottom 21 of the exterior can 2. In other words, the cylindrical portion 32b is not folded back to extend along the outer circumferential surface of the peripheral wall 32.

The gasket 5 is formed from a low moisture permeability resin such as a polypropylene resin, a polyphenylene sulfide resin, or a PFA resin (tetrafluoroethylene-perfluoroalkoxyethylene copolymer). The gasket 5 has a cylindrical shape conforming with the inner circumferential surface of the cylindrical side wall 22 of the exterior can 2 and is positioned between the cylindrical side wall 22 of the exterior can 2 and the peripheral wall 32 of the seal can 3. The gasket 5 is not limited to any particular one as long as it is able to insulate the seal can 3 from the exterior can 2; preferably, to provide moisture permeability and heat resistance, a polyphenylene sulfide resin or a fluorine resin such as a PFA resin is used.

After the power generation element is placed in the internal space between the exterior can 2 and seal can 3, the exterior can is crimped onto the seal can with the gasket 5 positioned between the cylindrical side wall 22 of the exterior can 2 and the peripheral wall 32 of the seal can 3. Specifically, after the openings of the exterior can 2 and seal can 3 are positioned to face each other and the peripheral wall 32 of the seal can 3 is inserted into the space inside the cylindrical side wall 22 of the exterior can 2, the exterior can 2 is crimped onto the seal can 3 with the gasket 5 positioned between the cylindrical side wall 22 and peripheral wall 32. The edge portion of the cylindrical side wall 22 is crimped inwardly toward the stepped portion 32 of the peripheral wall 32.

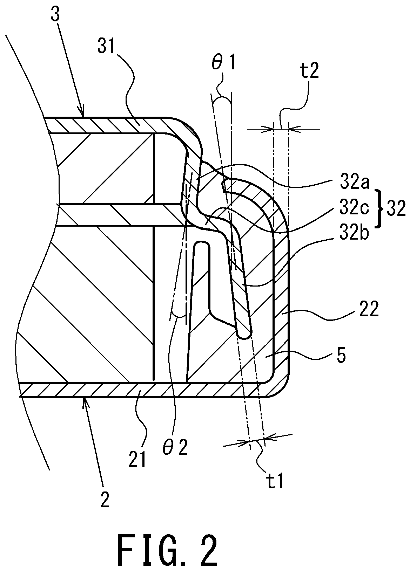

As shown in FIG. 2, it is preferable that the peripheral wall 32 has a relatively small thickness *t1* of 0.185 to 0.215 mm. If the thickness *t1* of the peripheral wall 32 is too small, this decreases the strength of the peripheral wall 32, which decreases sealability with respect to the internal space of the flat battery 1. In view of this, the thickness *t1* is preferably not smaller than 0.185 mm, more preferably not smaller than 0.190 mm, and particularly preferably not smaller than 0.195 mm. If the thickness *t1* is too large, this limits the internal volume of the flat battery 1, which prevents an increase in the capacity of the flat battery 1. In view of this, the thickness *t1* is preferably not larger than 0.215mm, more preferably not larger than 0.210 mm, and particularly preferably not larger than 0.205 mm. In implementations where the metal material of the seal can 3 is a cold-rolled steel sheet, which has a relatively low strength, the above-specified ranges for the thickness *t1* of the peripheral wall 32 are particularly suitable. As the thickness of the peripheral wall 32 is specified by those ranges, during crimping of the exterior can 2 onto the seal can 3, the cylindrical portion 32b and base-end portion 32a can easily deform to have an inclined construction, discussed further below, thereby providing good sealability and, at the same time, increasing the internal volume to increase battery capacity.

The cylindrical portion 32b of the peripheral wall 32 is inclined radially outwardly going from its end adjacent to the stepped portion 32c toward the extreme edge of the cylindrical portion 32b. Specifically, during crimping of the exterior can 2 onto the seal can 3, the base-end portion 32a of the peripheral wall 32 is pressed radially inwardly by the extreme edge of the cylindrical side wall 22 of the exterior can 2 and, at the same time, the stepped portion 32c is pressed downwardly and inwardly. At this point, as the thickness *t1* of the peripheral wall 32 is relatively small, i.e., the thickness *t1* is within such a range as specified above, portions of the base-end portion 32a closer to the cylindrical portion 32b can easily deform to be inclined radially inwardly, which causes the cylindrical portion 32b to deform such that its extreme edge appears to expand outwardly, i.e., to be inclined radially outwardly. Upon crimping of the cylindrical side wall 22 of the exterior can 2, the cylindrical portion 32b inclined radially outwardly obtains improved adhesion to the gasket 5 and suitably presses the gasket 5 radially outwardly and, at the same time, is pressed back radially inwardly by the gasket 5. This improves the contact pressure between the gasket 5 and the outer circumferential surface of the cylindrical portion 32b, thus preventing a gap from forming between the gasket 5 and cylindrical portion 32b, thereby increasing the contact area therebetween. The increased contact pressure and contact area between the gasket 5 and the outer circumferential surface of the cylindrical portion 32b further improve sealability with respect to the internal space of the flat battery 1.

The angle of inclination of the cylindrical portion 32b relative to the axial direction, *θ1,* may be 0.5° to 4°. If the angle of inclination *θ1* is too small, this decreases the contact pressure between the gasket 5 and the outer circumferential surface of the cylindrical portion 32b or the contact pressure between the gasket 5 and cylindrical side wall 22, thus decreasing sealability. On the other hand, if the angle of inclination *θ1* is too large, this decreases the contact pressure between the gasket 5 and the cylindrical portion 32b and/or the bottom 21 of the exterior can 2, thus decreasing sealability. The angle of inclination *θ1* is preferably not smaller than 1°, and more preferably not smaller than 2°.

The base-end portion 32a of the peripheral wall 32 is inclined radially inwardly going from its end adjacent to the top-face portion 31 toward its end adjacent to the stepped portion 32c. As discussed above, as the thickness *t1* of the peripheral wall 32 is relatively small, during crimping of the exterior can 2 onto the seal can 3, the base-end portion 32a can easily be deformed by downward and inward pressing forces by the cylindrical side wall 22 so as to be inclined radially inwardly. Thus, during crimping of the exterior can 2 onto the seal can 3, the edge portion of the cylindrical side wall 22 is more likely to press the gasket 5 downward, thereby improving the adhesion between the gasket 5 and cylindrical portion 32b. Further, the gasket 5 is more likely to be pressed by the extreme edge of the cylindrical portion 32b toward the bottom 21 of the exterior can 2. This further improves sealability with respect to the internal space of the flat battery 1. To increase the internal volume of the flat battery 1, the width of inclination of the base-end portion 32a is preferably smaller than the thickness *t1* of the peripheral wall 32 of the seal can 3, and more preferably not larger than 50 % of *t1.* As used herein, "width of inclination" means the radial distance between the end of the base-end portion 32a adjacent to the top-face portion 31 and its end adjacent to the stepped portion 32c, and corresponds to the radial displacement from the position of the base-end portion 32a at which its angle of inclination relative to the axial direction, 02, is 0°. This inclination geometry of the base-end portion 32a may be formed in advance during press-forming of the seal can 3, or may be formed by the pressing by the edge portion of the cylindrical side wall 22 during the above-discussed crimping.

The angle of inclination *θ*2 of the base-end portion 32a relative to the axial direction may be 0.5° to 5°. If the angle of inclination *θ*2 is too small, the edge portion of the cylindrical side wall 22 cannot easily press the cylindrical portion 32b downward, which decreases sealability. On the other hand, if the angle of inclination *θ2* is too large, this decreases the contact pressure between the gasket 5 and base-end portion 32a or the contact pressure between the gasket 5 and stepped portion 32c, thus decreasing sealability. The angle of inclination *θ2* is preferably not smaller than 1°, more preferably not smaller than 2°, and particularly preferably not smaller than 3°. As seen in the cross-sectional view of FIG. 2, in implementations where the base-end portion 32a does not include a straight line as shown but is composed of a curved line only, the angle of inclination *θ2* may be the largest angle formed by a tangent to the curved line and the axial direction.

The thickness *t2* of the cylindrical side wall 22 of the exterior can 2 is preferably 92 to 108 % of the thickness *t1* of the peripheral wall 32 of the seal can 3. If the thickness *t2* of the cylindrical side wall 22 is too small, a radially outward elastic force of the peripheral wall 32 generated after crimping, in particular an elastic force of the cylindrical portion 32b, may cause the cylindrical side wall 22 to deform radially outwardly. In view of this, the thickness *t2* is preferably not smaller than 92 % of the thickness *t1,* more preferably not smaller than 95 %, and particularly preferably not smaller than 98 %. If the thickness *t2* is too large, this limits the internal volume of the flat battery 1, preventing an increase in the capacity of the flat battery 1. In view of this, the thickness *t2* is preferably not larger than 108 % of the thickness *t1,* more preferably not larger than 105 %, and particularly preferably not larger than 102 %.

Although embodiments have been described, the present disclosure is not limited to the above-illustrated embodiments, and various modifications are possible without departing from the spirit of the disclosure.

### (Examples)

The contact pressure (i.e., surface pressure) between the seal can and gasket, as well as the contact pressure (i.e., surface pressure) between the exterior can and gasket, were calculated using structural analysis software and simulations of inventive and comparative examples were performed to determine sealability. The present structural analysis used general-purpose structural analysis software "LS-DYNA" from Livermore Software Technology Corporation. For the present structural analysis, the exterior can was made of SUS430, the seal can was made of a cold-rolled steel sheet (SPCD), the resin material for the gasket was polypropylene, and the tensile elasticity of the gasket was 1372 Mpa.

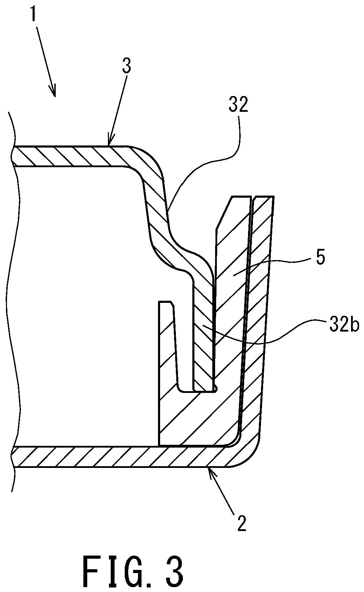

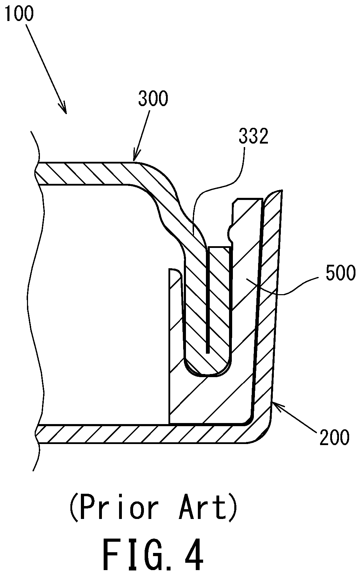

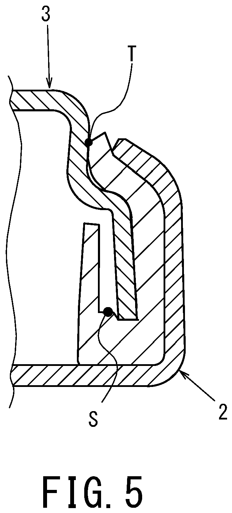

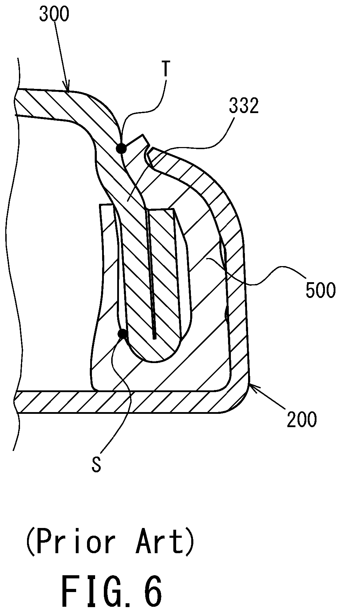

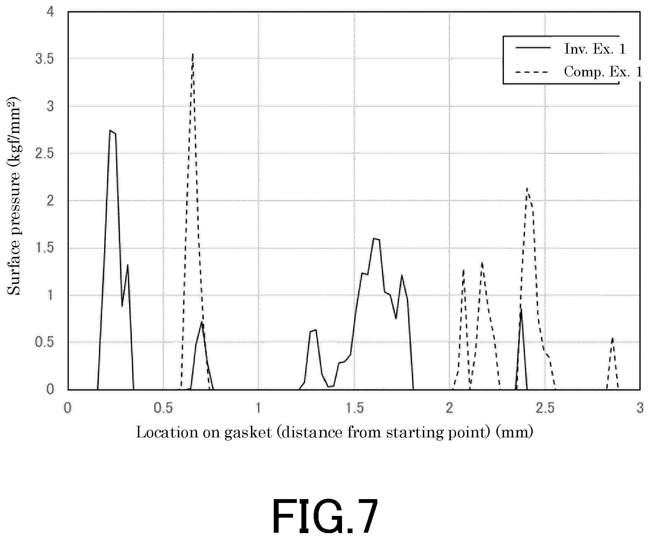

First, a comparison was made between a flat battery 1 of Inventive Example 1 shown in FIG. 3, in which the cylindrical portion 32b of the seal can 3 was not folded back and the thickness of the entire seal can 3 inclusive of the peripheral wall 32 was 0.2 mm, and the thickness of the entire exterior can 2 inclusive of the cylindrical side wall 22 was 0.2 mm, on the one hand, and a flat battery 100 of Comparative Example 1 shown in FIG. 4, in which an opening edge portion of the peripheral wall 332 of the seal can 300 was folded back to conform with its outer circumferential surface. In FIG. 4, the numeral 200 denotes the exterior can and the numeral 500 denotes the gasket. FIGS. 3 and 4 each show a flat battery before crimping of the exterior can onto the seal can. First, as shown in FIG. 2, for the peripheral wall 32 of the seal can 3, the angle of inclination *θ1* of the cylindrical portion 32b relative to the axial direction and the angle of inclination *θ*2 of the base-end portion 32a relative to the axial direction were determined; it was found that *θ1* was about 3° and *θ*2 was about 4°. Next, for each of the batteries shown in FIGS. 3 and 4, the above-described structural analysis was performed to determine surface pressure during crimping of the exterior can onto the seal can. As shown in FIG. 5, for the inventive example, calculations were performed of the surface pressure on the surface of the gasket 5 at locations from the starting point S to the end point T shown, where the gasket is in contact with the surface of the seal can 3. Similarly, as shown in FIG. 6, for Comparative Example 1, measurements were performed of the surface pressure on the surface of the gasket 500 at the corresponding locations from the starting point S to the end point, where the gasket is in contact with the surface of the seal can 300. The measurement results are shown in the graph of FIG. 7. In the graph of FIG. 7, the horizontal axis indicates the distance from the starting point S toward the end point T; the solid line indicates surface pressure over the relevant region in Inventive Example 1; and the broken line indicates surface pressure over the relevant region in Comparative Example 1.

In the graph of FIG. 7, for each of Inventive Example 1 and Comparative Example 1, the sealability provided by the seal can was evaluated from the total area under the graph of surface pressure. Where the area defined by the graph of the surface pressure for Comparative Example 1 is represented by "100 %", the value for Inventive Example 1 is 130 %, showing that the sealability provided by the seal can was improved.

An analogous structural analysis was performed for each of Inventive Example 1 and Comparative Example 1 to determine the contact pressure (i.e., surface pressure) on locations of the gasket in contact with the surface of the exterior can. Although not shown, a graph analogous to FIG. 7 was created and, for each of the examples, the sealability provided by the exterior can was evaluated from the total area under the graph of surface pressure. For the purposes of the calculation of surface pressure, the starting point S is the radially innermost point on the surface of the gasket opposite to that adjacent to the bottom of the exterior can, and the end point T is the uppermost point on the surface of the gasket opposite to that adjacent to the cylindrical side wall of the exterior can. Where the area defined by the graph of surface pressure for Comparative Example 1 is represented by "100 %", the value for Inventive Example 1 is 86 %, showing that the sealability provided by the exterior can was higher in Comparative Example 1.

In view of these results, a comparison was made between the sum of the area defined by the graph of the surface pressure on locations of the gasket in contact with the seal can and the area defined by the graph of the surface pressure on locations of the gasket in contact with the exterior can of Inventive Example 1, on the one hand, and that for Comparative Example 1, on the other, to evaluate the sealability of the entire flat battery of each of these examples. It was found that the value for Inventive Example 1 is 95 % of the value for Comparative Example 1, showing that Inventive Example 1 and Comparative Example 1 provided about the same level of sealability. This is presumably because, for Inventive Example 1, the improvement in the sealability provided by the seal can compensated for the decrease in the sealability provided by the exterior can. Thus, it was found that Inventive Example 1 provided good sealability similar to cases where the cylindrical portion of the seal can is folded back, even though the thickness of the peripheral wall of the seal can was relatively small and the cylindrical portion of the seal can was not folded back and, in addition, Inventive Example 1 provided an increased internal volume of the flat battery and increased capacity by means of the absence of a fold-back of the cylindrical portion of the seal can. It is to be noted here that, as shown in FIG. 6, a relatively large gap was formed between the peripheral wall 332 and gasket 500, decreasing the contact surface of the peripheral wall 332 and gasket 500. This is presumably because the gasket 500, in contact with the extreme edge of the folded peripheral wall 332, was expanded radially outwardly.

Next, an exterior can of SUS430 with a plate thickness of 0.2 mm, a seal can of a cold-rolled steel sheet (SPCD) with a plate thickness of 0.2 mm and a gasket of polypropylene were actually fabricated and used to construct a flat battery of size 2032, which was cut along the height direction and the cut surface was observed; it was found that the angle of inclination *θ1* of the cylindrical portion of the peripheral wall of the seal can relative to the axial direction was 3°, and the angle of inclination *θ*2 of the base-end portion relative to the axial direction was 4°, which demonstrated that the same results were obtained as from the above-discussed structural analysis.

Next, the same structural analysis was performed for the flat battery of Example 1 and the flat batteries of Comparative Examples 2 and 3 described above to evaluate their sealing properties. In each of the flat batteries of Comparative Examples 2 and 3, the cylindrical portion of the seal can was not folded back to conform with the outer circumferential surface of the cylindrical portion, as was the case with Inventive Example 1. Further, in the structural analysis, for Comparative Example 2, the thickness of the seal can inclusive of the peripheral wall was 0.15 mm, and for Comparative Example 3, the thickness of the seal can inclusive of the peripheral wall was 0.25 mm; regarding the exterior can and other components, the same conditions as for Inventive Example 1 applied. The seal cans of Inventive Example 1 and Comparative Examples 2 and 3 were made of a cold-rolled steel sheet (SPCD).

In the same manner as described above, the angle of inclination *θ1* of the cylindrical portion 32b relative to the axial direction and the angle of inclination *θ*2 of the base-end portion 32a relative to the axial direction were determined; it was found that the angle of inclination *θ1* for Comparative Example 2 was above 4° and the angle of inclination *θ*2 was above 5°, whereas the angles of inclination *θ1* and *θ2* for Comparative Example 3 were approximately 0° (below 0.5°).

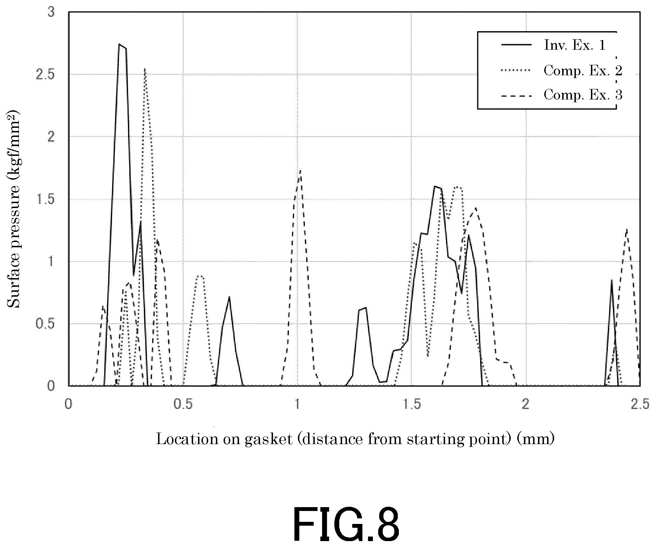

The surface pressure on locations of the gasket in contact with the surface of the seal can for each of Inventive Example 1 and Comparative Examples 2 and 3 is shown in the graph of FIG. 8. In the graph shown in FIG. 8, the horizontal axis indicates the distance from the starting point S toward the end point T, the solid line (t = 0.2 mm) indicates surface pressure over the relevant region in Inventive Example 1, the relatively fine broken line (t = 0.15 mm) indicates surface pressure over the relevant region in Comparative Example 2, and the relatively coarse broken line (t = 0.25 mm) indicates surface pressure over the relevant region in Comparative Example 3.

In the graph of FIG. 8, for each of Comparative Examples 2 and 3, the sealability provided by the seal can was evaluated from the total area under the graph of surface pressure. Where the area defined by the graph of the surface pressure for Comparative Example 1 shown in FIG. 7 discussed above is represented by "100 %", the value for Comparative Example 2 in FIG. 8 is 101 % and the value for Comparative Example 3 is 104 %. As discussed above, since the value for Inventive Example 1 relative to that for Comparative Example 1 is 130 %, it is demonstrated that the flat battery of Inventive Example 1 has the best sealability provided by the seal can.

Further, in the same manner as described above, for each of the examples, the sealability provided by the exterior can was evaluated by calculating the contact pressure (i.e., surface pressure) on locations of the gasket in contact with the surface of the exterior can and determining the total area under the graph of surface pressure. Where the area defined by the graph of the surface pressure for Comparative Example 1 is represented by "100 %", the value for Comparative Example 2 is 80 %, and the value for Comparative Example 3 is 84 %. Since the value for Inventive Example 1 relative to that for Comparative Example 1 is 86 %, it is demonstrated that the flat battery of Inventive Example 1 has a better sealability provided by the exterior can than Comparative Examples 2 and 3. Based on these results, the sealability of the entire flat battery of each of Comparative Examples 2 and 3 was evaluated in the same manner as described above; it was found that the sealability of Comparative Example 2 is 84 % of that for Comparative Example 1, and the sealability for Comparative Example 3 is 88 %. This shows that the flat batteries of Comparative Examples 2 and 3 have sealabilities inferior to that of the flat battery of Inventive Example 1.

Thus, in the flat battery of Inventive Example 1, the thickness of the seal can (i.e., peripheral wall) and the thickness of the exterior can (i.e., cylindrical side wall) were in suitable ranges, which allowed the peripheral wall 32 to deform appropriately during crimping such that, in the peripheral wall 32, the angle of inclination *θ1* of the cylindrical portion 32b relative to the axial direction was in the range of 0.5° to 4° and the angle of inclination *θ*2 of the base-end portion 32a relative to the axial direction was in the range of 0.5° to 5°; thus, a higher contact pressure (i.e., surface pressure) was obtained than in the batteries of Comparative Examples 2 and 3 even though the plate thickness of the seal can was relatively small, providing improved sealability. This suggests that the construction of the flat battery of the present invention enables an increase in its internal volume to increase capacity while providing as good a sealability as Comparative Example 1.

### REFERENCE SIGNS LIST

1: flat battery
2: exterior can; 21: bottom; 22: cylindrical side wall
3: seal can; 31: top-face portion; 32: peripheral wall; 32a: base-end portion; 32b: cylindrical portion; 32c: stepped portion
41: positive electrode; 42: negative electrode; 43: separator
5: gasket
θ1: angle of inclination; θ2: angle of inclination
t1: thickness; t2: thickness

## Claims

1. A flat battery comprising:
an exterior can including a bottom and a cylindrical side wall;
a seal can including a top-face portion and a peripheral wall and facing the exterior can; and
a gasket positioned between the cylindrical side wall and the peripheral wall,
wherein:
the peripheral wall includes: a base-end portion adjacent to the top-face portion; a cylindrical portion having an outer diameter larger than an outer diameter of the base-end portion and having an extreme edge facing the bottom of the exterior can; and a stepped portion located between the base-end portion and the cylindrical portion;
the cylindrical portion is inclined radially outwardly going from an end adjacent to the stepped portion toward the extreme edge of the cylindrical portion and has an angle of inclination of 0.5° to 4° relative to an axial direction; and
the base-end portion is inclined radially inwardly going from an end adjacent to the top-face portion toward an end adjacent to the stepped portion and has an angle of inclination of 0.5° to 5° relative to the axial direction.

2. The flat battery according to claim 1, wherein the peripheral wall of the seal can has a thickness of 0.185 to 0.215 mm.

3. The flat battery according to claim 2, wherein the cylindrical side wall of the exterior can has a thickness of 92 to 108 % of the thickness of the peripheral wall.

4. A flat battery comprising:
an exterior can including a bottom and a cylindrical side wall;
a seal can including a top-face portion and a peripheral wall and facing the exterior can; and
a gasket positioned between the cylindrical side wall and the peripheral wall,
wherein:
the peripheral wall includes: a base-end portion adjacent to the top-face portion; a cylindrical portion having an outer diameter larger than an outer diameter of the base-end portion and having an extreme edge facing the bottom of the exterior can; and a stepped portion located between the base-end portion and the cylindrical portion;
the peripheral wall of the seal can has a thickness of 0.185 to 0.215 mm; and
the cylindrical side wall of the exterior can has a thickness of 92 to 108 % of the thickness of the peripheral wall.

5. The flat battery according to claim 4, wherein the cylindrical portion is inclined radially outwardly going from an end adjacent to the stepped portion toward the extreme edge of the cylindrical portion.

6. The flat battery according to claim 5, wherein the cylindrical portion has an angle of inclination of 0.5° to 4° relative to an axial direction.

7. The flat battery according to claim 4, wherein the base-end portion is inclined radially inwardly going from an end adjacent to the top-face portion toward an end adjacent to the stepped portion.

8. The flat battery according to claim 7, wherein the base-end portion has an angle of inclination of 0.5° to 5° relative to an axial direction.

9. The flat battery according to any one of claims 1 to 8, wherein the seal can is formed from a cold-rolled steel sheet.

10. The flat battery according to any one of claims 1 to 8, wherein the exterior can is formed from a stainless steel sheet.
